# EUROPEAN PATENT SPECIFICATION

(11) **EP 1 479 516 B1**
(45) Date of publication and mention of the grant of the patent: **23.05.2007**
(21) Application number: 04251622.9
(22) Date of filing: 22.03.2004
(51) Int. Cl.: B32B 37/00, B32B 27/00, C09D 167/00, B05D 7/02

(54) **Method for coating composite structures with a multi-axial crystalline thermoplastic coat**
Verfahren zum Beschichten einer Verbundwerkstoffstruktur mit einer mehrachsigen kristallinen thermoplastischen Beschichtung
Procédé de revêtement de structures composites par un polymère thermoplastique cristallin multi-axial

(30) Priority: 23.05.2003 US 445238
(43) Date of publication of application: 24.11.2004
(73) Proprietor: NORTHROP GRUMMAN CORPORATION, Los Angeles, CA 90067-2199 (US)
(72) Inventor: Dimarzio, Don, New York 11768-2421 (US); Weizenecker, Charles, New York 11790-1009 (US); Chu, Steve, New York 11779-3521 (US); Anton, Dom, New York 11787-2414 (US)
(74) Representative: Lawrence, John

(56) References cited:
- EP-A- 0 465 252
- US-A- 6 132 668
- US-B1- 6 174 405

## Description

### TECHNICAL FIELD OF THE INVENTION

This invention relates generally to the field of materials construction and, more specifically, to a method of multi-axial crystalline thermoplastic coating of composite structures.

### BACKGROUND OF THE INVENTION

Composite structures are desirable in many industries for many applications. The aerospace industry, for example, uses composite structures extensively because, among other desirable attributes, composites have high strength-to-weight ratios. Because of the ever increasing use of composite structures throughout industry, manufacturers are continually searching for better and more economical ways of fabricating composite structures.

Composite structures applied to the exterior of ships and aircraft can experience significant degradation and damage due to attack from environmental exposure and erosion. In this regard, such structures are constantly subjected to oxidation, moisture, fouling, salt-spray, UV radiation, chemicals, and high and low temperatures, among other things, that can cause such structures to experience significant degradation and damage over time. As a consequence, such structural components must be constantly repaired or replaced to prevent the possibility that a given vessel or aircraft will be damaged permanently, if not destroyed.

To attempt to prevent the damage caused by fatigue and environmental exposure on such composite and metallic components, a variety of coating agents and methods of applying the same to such components have been developed to improve their durability.

### SUMMARY OF THE INVENTION

The present invention concerns a method for thermoplastic coating composite structures as defined in appended claim 1 and including applying a crystalline multi-axially oriented thermoplastic layer onto a working surface of a tool. A layer of composite material is applied onto the crystalline multi-axially oriented thermoplastic layer, and the crystalline multi-axially oriented thermoplastic layer and the layer of composite material are cocured at a specific temperature and pressure in an autoclave. The softening temperature of the crystalline multi-axially oriented thermoplastic layer is not substantially greater than the curing temperature of the composite material.

A technical advantage of the present invention includes improved conforming of the thermoplastic to a complex or otherwise non-flat shape of the working surface of the tool, while maintaining a curing temperature low enough so as to not cause damage to the co-cured composite layer.

Another technical advantage of the present invention includes that the crystalline multi-axially oriented thermoplastic layer imparts a more equalized tensile strength to the composite structure. Crystalline thermoplastics also exhibit low water and gas permeability and high resistance to erosion and wear.

Yet another technical advantage of the present invention includes improved uniformity in the texture and thickness of the thermoplastic coating.

Other technical advantages are readily apparent to one skilled in the art from the following figures, descriptions, and claims.

### BRIEF DESCRIPTION OF THE DRAWINGS

For a more complete understanding of the invention, and for further features and advantages, reference is now made to the following description, taken in conjunction with the accompanying drawings, in which:
**FIGURES 1A - 1D** are block diagrams illustrating a method for crystalline multi-axial thermoplastic coating for a composite structure in accordance with one embodiment of the present invention; and
**FIGURE 2** is a flowchart illustrating a method for crystalline multi-axial thermoplastic coating for a composite structure in accordance with one embodiment of the present invention.

### DETAILED DESCRIPTION OF THE INVENTION

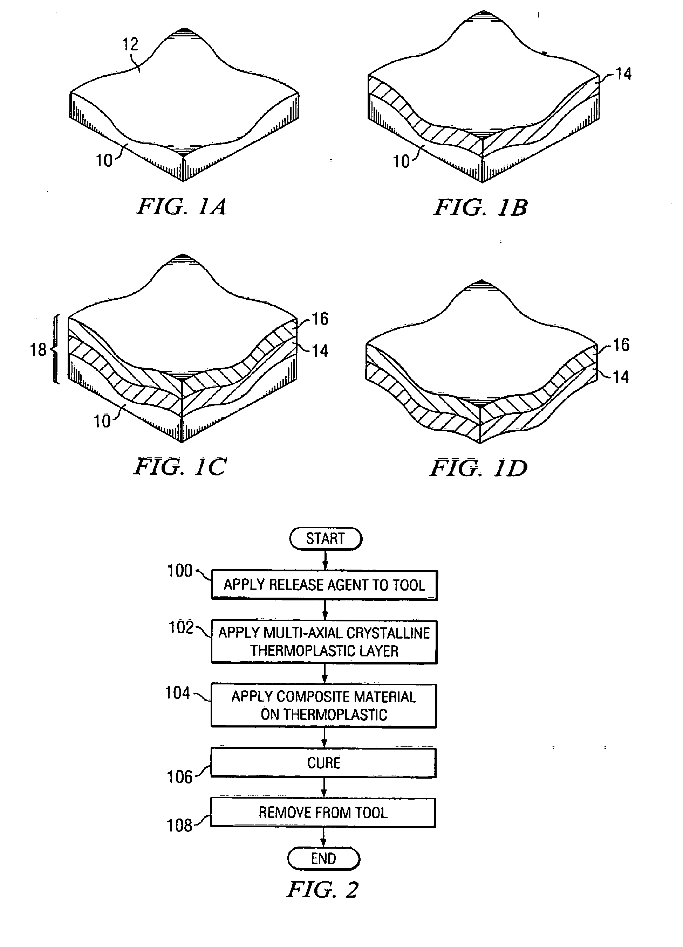

FIGURES 1A - 1D are block diagrams illustrating a method for multi-axial thermoplastic coating of composite structures in accordance with one embodiment of the present invention. FIGURE 1A illustrates a metal mold or "tool" 10 having a working surface 12 in accordance with one embodiment of the present invention. Working surface 12 reflects the desired shape and/or contours of the outer surface of a final composite structure and may be formed from any suitable material, such as aluminum or steel. However, tool 10 may be formed from other suitable materials, such as ceramic. Working surface 12 may be substantially flat or may comprise compound curvatures or otherwise be non-flat. In a particular embodiment, working surface 12 is coated with Frekote™, Teflon™, or another suitable release coating (not explicitly shown).

FIGURE 1B illustrates a thermoplastic layer 14 applied onto the working surface 12 of tool 10 in accordance with one embodiment of the present invention. In a particular embodiment, layer 14 comprises an extruded thermoplastic film. Extruded thermoplastic films may be uniaxial or multi-axial. Uniaxial films have a molecular orientation in one predominant direction and multi-axial films have molecular orientation in two or more directions. Uniaxial films often have higher tensile strength and tear resistance in a direction parallel to the direction of the molecular orientation, but may have lower tensile strength and tear more easily transverse to the orientation. A crystalline multi-axially oriented thermoplastic layer, such as that described in U.S. Patent 6,132,668, may have a more equalized tensile strength. In one embodiment, layer 14 comprises a crystalline multi-axially oriented thermoplastic layer. In a particular embodiment, layer 14 comprises an extruded film of liquid crystal polymer ("LCP") having a molecular orientation in two directions (a "biaxially-oriented LCP" or "biaxial LCP").

A process of heating the thermoplastic coating together with the composite may be termed "co-curing." As described in more detail below in reference to FIGURES 1C and 1D, crystalline multi-axially oriented thermoplastic layer 14 may, in accordance with one embodiment of the present invention, be co-cured with a composite layer 16. The teachings of the present invention recognize that heating a thermoplastic-coated composite material to a temperature at or near a softening temperature of the thermoplastic layer may have the desirable result of causing the thermoplastic layer to better conform to the shape of the composite surface and to result in a thermoplastic coating that has a more uniform texture and thickness. This effect may be especially pronounced wherein the shape of the desired composite includes complex curves. However, many thermoplastics have a softening temperature that is substantially greater than the curing temperature of the composite material. Heating the thermoplastic-coated composite material to a temperature substantially greater than the curing temperature of the composite may result in heat-induced damage to the composite layer.

The teachings of the present invention recognize that a crystalline multi-axially oriented thermoplastic layer 14 having a softening temperature not substantially greater than the curing temperature of the composite allows for the layer 14 to adhere to the composite layer 16 and to conform to a complex or otherwise non-flat shape of working surface 12 during curing, while maintaining a curing temperature low enough so as to not cause damage to the composite layer 16. "Substantially" in this context means about 5.5°C. In a particular embodiment, layer 14 may comprise Vectran™ biaxially-oriented liquid crystal polymer with a melting temperature of about 428 to 446 °C and a softening temperature of about 110°C to 120°C, available from Foster-Miller, Inc. In a particular embodiment, layer 14 may have a thickness of approximately 0.050mm-0.0760mm, (0.002 - 0.003 inches). The softening temperature and the thickness of the layer 14 may suitably vary in accordance with various embodiments of the present invention.

At FIGURE 1C, a layer 16 of composite material is applied by means of prepreg, wet lay-up, or other suitable methods onto the thermoplastic layer 14. The composite material may be comprised of graphite or fiberglass reinforced epoxy or other suitable materials. The composite/coating/tool assembly 18 is then cured using an oven, autoclave, or other suitable device. In a particular embodiment wherein crystalline multi-axially oriented thermoplastic layer 14 has a softening temperature of about 110°C to 120°C, the curing process may be conducted at a temperature of about 177°C and at a pressure of about 275 kPa-345kPa (40 - 50 psi). In a particular embodiment, the curing process may comprise an autoclave vacuum bag process using either a bleed or no-bleed curing cycle.

At FIGURE 1D, upon completion of curing, layer 16 of composite material and thermoplastic layer 14 are removed from tool 10. Thermoplastic layer 14 may then form a protective outer surface of the composite layer 16, and composite layer 16 together with thermoplastic layer 14 may then be suitably affixed to the outer surface of a vessel or aircraft or otherwise suitably employed. In particular embodiments, an adhesive (not explicitly shown) may be applied onto the thermoplastic layer 14 before applying layer 16 of composite material. In yet another embodiment, the composite-facing side of thermoplastic layer 14 may be mechanically abraded before or after application of layer 14 onto tool 10. The adhesive and/or mechanical abrasion may increase a bond between thermoplastic layer 14 and composite layer 16, thereby, in particular embodiments, increasing the strength of the structure comprising layers 14 and 16 and further increasing the ease with which the thermoplastic-covered and cured composite material may be removed from tool 10.

FIGURE 2 is a flowchart illustrating a method for thermoplastic coating of a composite structure in accordance with one embodiment of the present invention. Beginning with step 100, a release agent such as Teflon™ is applied to the working surface 12 of tool 10.

Proceeding to step 102, biaxial LCP or another suitable crystalline multi-axially oriented thermoplastic layer 14 is applied onto the working surface 12 of tool 10. At step 104, a layer 16 of composite material is applied onto the thermoplastic layer 14. Thermoplastic layer 14 and composite material layer 16 are then co-cured at step 106. Finally, at step 108, thermoplastic layer 14 and composite material layer 16 are removed from the tool 10, resulting in a crystalline multi-axially oriented thermoplastic-coated composite structure.

## Claims

1. A method for thermoplastic coating a composite structure, comprising;
applying a crystalline multi-axially oriented thermoplastic layer (14) onto a working surface (12) of a tool (10), the crystalline multi-axially oriented thermoplastic layer (14) having a softening temperature;
applying a layer of curable composite material (16) onto the crystalline multi-axially oriented thermoplastic layer (14);
heating the crystalline multi-axially oriented thermoplastic layer (14) and the layer of composite material (16) at a curing temperature to cure the layer of composite material; and
wherein the softening temperature of the thermoplastic layer is not more than 5.5°C greater than the curing temperature.

2. The method of claim wherein the crystalline multi-axially oriented thermoplastic is a liquid crystal polymer (14) having a softening temperature of about 100°C to 120°C and said heating the crystalline multi-axially oriented liquid crystal polymer layer (14) and the layer of composite material (16) is carried out at a temperature of about 177°C, and said method further comprises:
applying a release agent on a working surface (12) of the tool (10); and
removing the crystalline multi-axially oriented thermoplastic layer (14) and the layer of composite material (16) from the tool (10).

3. The method of claim 2, wherein the working surface (12) of the tool (10) is non-flat.

4. The method of claim 2 or claim 3, further comprising applying an adhesive onto the crystalline multi-axially oriented thermoplastic layer (14) before applying the layer of composite material (16).

5. The method of claim 1, further comprising applying a release agent onto the working surface (12) before applying the crystalline multi-axially oriented thermoplastic layer (14).

6. The method of claim 1 or claim 5, wherein disposing a crystalline multi-axially oriented thermoplastic layer (14) comprises applying a crystalline multi-axially oriented thermoplastic layer (14) comprising a tool-facing surface and a composite-facing surface, and further comprising;
abrading the composite-facing surface of the crystalline multi-axially oriented thermoplastic layer (14) before applying the composite layer (16).

7. The method of any one of claims 1, 5 or 6, further comprising applying an adhesive onto the crystalline multi-axially oriented thermoplastic layer (14) before applying the layer of composite material (16).

8. The method of any one of claims 1, or 5 to 7, further comprising removing the crystalline multi-axially oriented thermoplastic layer (14) and the layer of composite material (16) from the tool (10).

9. The method of any one of claims 1, or 5 to 8, wherein applying the crystalline multi-axially oriented thermoplastic layer (14) comprises applying a crystalline multi-axially oriented thermoplastic layer (14) comprising a liquid crystal polymer.

10. The method of any one of claims 1, or 5 to 9, wherein applying the crystalline multi-axially oriented thermoplastic layer (14) comprises applying a crystalline multi-axially oriented thermoplastic layer (14) comprising a biaxially-oriented thermoplastic layer.

11. The method of any one of claims 1, or 5 to 10, wherein applying the crystalline multi-axially oriented thermoplastic layer (14) comprises applying a crystalline multi-axially oriented thermoplastic layer (14) having a softening temperature of about 110°C to 120°C.

12. The method of any one of claims 1, or 5 to 11, wherein co-curing the crystalline multi-axially oriented thermoplastic layer (14) and the layer of composite material (16) comprises heating the crystalline multi-axially oriented thermoplastic layer (14) and the layer of composite material (16) at a temperature of about 177°C.

13. The method of any one of claims 1, or 5 to 12, wherein the working surface (12) is non-flat.

## Patentansprüche

1. Verfahren zum thermoplastischen Beschichten einer Verbundwerkstoffstruktur, umfassend:
Das Auftragen einer kristallinen mehrachsig orientierten thermoplastischen Schicht (14) auf eine Arbeitsoberfläche (12) eines Werkzeugs (10), wobei die kristalline mehrachsig orientierte thermoplastische Schicht (14) eine Erweichungstemperatur aufweist,
das Auftragen einer Schicht aus aushärtbarem Verbundwerkstoffmaterial (16) auf die kristalline mehrachsig orientierte thermoplastische Schicht (14),
das Erhitzen der kristallinen mehrachsig orientierten thermoplastischen Schicht (14) und der Schicht des Verbundwerkstoffmaterials (16) auf eine Aushärttemperatur, um die Schicht des Verbundwerkstoffmaterials auszuhärten,
wobei die Erweichungstemperatur der thermoplastischen Schicht nicht mehr als 5,5 °C über der Aushärttemperatur liegt.

2. Verfahren nach Anspruch 1, wobei die kristalline mehrachsig orientierte thermoplastische Schicht ein Flüssigkristallpolymer (14) ist, welches eine Erweichungstemperatur von etwa 100 °C bis 120 °C aufweist, und wobei das Erhitzen der kristallinen mehrachsig orientierten Flüssigkristallpolymerschicht (14) und der Schicht an Verbundwerkstoffmaterial (16) bei einer Temperatur von etwa 177 °C durchgeführt wird, und wobei das Verfahren ferner umfasst:
das Auftragen eines Trennmittels auf eine Arbeitsoberfläche (12) des Werkzeugs (10); und
das Entfernen der kristallinen mehrachsig orientierten thermoplastischen Schicht (14) und der Schicht an Verbundwerkstoffmaterial (16) von dem Werkzeug.

3. Verfahren nach Anspruch 2, wobei die Arbeitsoberfläche (12) des Werkzeugs (10) nicht flach ist.

4. Verfahren nach Anspruch 2 oder Anspruch 3, ferner umfassend das Auftragen eines Haftzusatzes auf die kristalline mehrachsig orientierte thermoplastische Schicht (14), bevor die Schicht an Verbundwerkstoffmaterial (16) aufgetragen wird.

5. Verfahren nach Anspruch 1, ferner umfassend das Auftragen eines Trennmittels auf die Arbeitsoberfläche (12), bevor die kristalline mehrachsig orientierte thermoplastische Schicht (14) aufgetragen wird.

6. Verfahren nach Anspruch 1 oder 5, wobei das Ablegen einer kristallinen mehrachsig orientierten thermoplastischen Schicht (14) das Auftragen einer kristallinen mehrachsig orientierten thermoplastischen Schicht (14) mit einer dem Werkzeug zugewandten Oberfläche und einer dem Verbundwerkstoff zugewandten Oberfläche umfasst, und ferner umfassend
das Abschleifen der dem Verbundwerkstoff zugewandten Oberfläche der kristallinen mehrachsig orientierten thermoplastischen Schicht (14), bevor die Verbundwerkstoffschicht (16) aufgetragen wird.

7. Verfahren nach irgend einem der Ansprüche 1, 5 oder 6, ferner umfassend das Auftragen eines Haftzusatzes auf die kristalline mehrachsig orientierte thermoplastische Schicht (14), bevor die Schicht von Verbundwerkstoffmaterial (16) aufgetragen wird.

8. Verfahren nach irgend einem der Ansprüche 1 oder 5 bis 7, ferner umfassend das Entfernen der kristallinen mehrachsig orientierten thermoplastischen Schicht (14) und der Schicht an Verbundwerkstoffmaterial (16) von dem Werkzeug (10).

9. Verfahren nach irgend einem der Ansprüche 1 oder 5 bis 8, wobei das Auftragen der kristallinen mehrachsig orientierten thermoplastischen Schicht (14) das Auftragen einer kristallinen mehrachsig orientierten thermoplastischen Schicht (14) umfasst, die ein Flüssigkristallpolymer aufweist.

10. Verfahren nach irgendeinem der Ansprüche 1 oder 5 bis 9, wobei das Auftragen der kristallinen mehrachsig orientierten thermoplastischen Schicht (14) das Auftragen einer kristallinen mehrachsigen orientierten thermoplastischen Schicht (14) umfasst, die eine biaxial orientierte thermoplastische Schicht aufweist.

11. Verfahren nach irgend einem der Ansprüche 1 oder 5 bis 10, wobei das Auftragen der kristallinen mehrachsig orientierten thermoplastischen Schicht (14) das Auftragen einer kristallinen mehrachsig orientierten thermoplastischen Schicht (14) mit einer Erweichungstemperatur von etwa 110 °C bis 120 °C umfasst.

12. Verfahren nach irgend einem der Ansprüche 1 oder 5 bis 11, wobei das gleichzeitige Aushärten der kristallinen mehrachsig orientierten thermoplastischen Schicht (14) und der Schicht an Verbundwerkstoffmaterial (16) das Erhitzen der kristallinen mehrachsig orientierten thermoplastischen Schicht (14) und der Schicht an Verbundwerkstoffmaterial (16) bei einer Temperatur von etwa 177 °C umfasst.

13. Verfahren nach irgend einem der Ansprüche 1 oder 5 bis 12, wobei die Arbeitsoberfläche (12) nicht flach ist.

## Revendications

1. Procédé permettant de recouvrir une structure composite d'un revêtement thermoplastique, comprenant ;
l'application d'une couche thermoplastique cristalline orientée dans le sens axial (14) sur une surface de travail (12) d'un outil (10), la couche thermoplastique cristalline orientée dans le sens axial (14) ayant une température de ramollissement ;
l'application d'une couche de matériau composite durcissable (16) sur la couche thermoplastique cristalline orientée dans le sens axial (14) ;
chauffage de la couche thermoplastique cristalline orientée dans le sens axial (14) et de la couche de matériau composite (16) à une température de durcissement afin de durcir la couche de matériau composite ; et dans
laquelle température de ramollissement de la couche thermoplastique est au plus de 5,5°C supérieure à la température de durcissement.

2. Procédé selon la revendication 1, dans lequel le thermoplastique cristallin orienté dans le sens axial est un polymère à cristaux liquides (14) ayant une température de ramollissement d'environ 100°C à 120°C et ledit chauffage de la couche polymère à cristaux liquides cristalline orientée dans le sens axial (14) et de la couche de matériau composite (16) est effectué à une température d'environ 177°C, et ledit procédé comprend en outre :
l'application d'un agent anti-adhésif sur une surface de travail (12) de l'outil (10) ; et
l'élimination de la couche thermoplastique cristalline orientée dans le sens axial (14) et de la couche de matériau composite (16) de l'outil (10).

3. Procédé selon la revendication 2, dans lequel la surface de travail (12) de l'outil (10) est non plate.

4. Procédé selon la revendication 2 ou la revendication 3, comprenant en outre l'application d'un adhésif sur la couche thermoplastique cristalline orientée dans le sens axial (14) avant d'appliquer la couche de matériau composite (16).

5. Procédé selon la revendication 1, ccomprenant en outre l'application d'un agent anti-adhésif sur la surface de travail (12) avant d'appliquer la couche thermoplastique cristalline orientée dans le sens axial (14).

6. Procédé selon la revendication 1 ou la revendication 5, dans lequel le dépôt d'une couche thermoplastique cristalline orientée dans le sens axial (14) comprend l'application d'une couche thermoplastique cristalline orientée dans le sens axial (14) comprenant une surface située face à l'outil et d'une surface située face au composite, et comprenant en outre à ;
l'abrasion de la surface située face au composite de la couche thermoplastique cristalline orientée dans le sens axial (14) avant d'appliquer la couche composite (16).

7. Procédé selon l'une quelconque des revendications 1, 5 ou 6, comprenant en outre l'application d'un adhésif sur la couche thermoplastique cristalline orientée dans le sens axial (14) avant d'appliquer la couche de matériau composite (16).

8. Procédé selon l'une quelconque des revendications 1, ou 5 à 7, comprenant en outre l'élimination de la couche thermoplastique cristalline orientée dans le sens axial (14) et de la couche de matériau composite (16) de l'outil (10).

9. Procédé selon l'une quelconque des revendications 1, ou 5 à 8, dans lequel l'application de la couche thermoplastique cristalline orientée dans le sens axial (14) comprend l'application d'une couche thermoplastique cristalline orientée dans le sens axial (14) comprenant un polymère à cristaux liquides.

10. Procédé selon l'une quelconque des revendications 1, ou 5 à 9, dans lequel l'application de la couche thermoplastique cristalline orientée dans le sens axial (14) comprend l'application d'une couche thermoplastique cristalline orientée dans le sens axial (14) comprenant une couche thermoplastique orientée biaxialement.

11. Procédé selon l'une quelconque des revendications 1, ou 5 à 10, dans lequel l'application de la couche thermoplastique cristalline orientée dans le sens axial (14) comprend l'application d'une couche thermoplastique cristalline orientée dans le sens axial (14) ayant une température de ramollissement d'environ 110°C à 120°C.

12. Procédé selon l'une quelconque des revendications 1, ou 5 à 11, dans lequel le co-durcissement de la couche thermoplastique cristalline orientée dans le sens axial (14) et de la couche de matériau composite (16) comprend le chauffage de la couche thermoplastique cristalline orientée dans le sens axial (14) et de la couche de matériau composite (16) à une température d'environ 177°C.

13. Procédé selon l'une quelconque des revendications 1, ou 5 à 12, dans lequel la surface de travail (12) est non plate.
